# DEMANDE DE BREVET EUROPEEN

(11) **EP 2 604 543 A1**
(43) Date de publication de la demande: **19.06.2013**
(21) Numéro de dépôt: 12197128.7
(22) Date de dépôt: 14.12.2012
(51) Int. Cl.: B65D 33/04, B65D 75/58, B65G 51/06

(54) **Emballage à coiffe retournée pour le transport d'articles à l'intérieur d'un tube d'un réseau pneumatique**

(30) Priorité: 16.12.2011 FR 1161789
(71) Demandeur: Decomatic S.A., 38290 La Verpillière (FR)
(72) Inventeur: Allegre, Jean-Luc, 38460 Trept (FR); Bugnet, Sylvie, 38138 Les Côtes d'Aray (FR)
(74) Mandataire: Thibault, Jean-Marc

(57) **Abrégé**

L'invention concerne un emballage pour le transport d'articles à l'intérieur d'un tube d'un réseau pneumatique, comportant un sac **(3)** réalisé en matière plastique souple possédant une face recto **(4)** et une face verso délimitant un volume interne fermé accessible par un passage d'accès **(8)** aménagé dans une face du sac et obturable à l'aide d'un moyen de fermeture étanche **(9),** le sac **(3)** comportant deux bords longitudinaux fermés **(7)** opposés et deux bords fermés transversaux opposés antérieur **(61)** et postérieur (**6**₂).

Selon l'invention, l'emballage comporte à partir du bord transversal antérieur (**6**₁), un manchon **(12)** en matière plastique souple comportant une première **(15)** et une deuxième **(16)** parois s'étendant à partir dudit bord transversal (**6**₁) de manière superposée dans le prolongement des faces recto **(4)** et verso jusqu'à des bords d'extrémité libres **(19)** qui délimitent entre eux une ouverture de retournement **(13),** le manchon **(12)** étant fermé au niveau du bord transversal antérieur **(61)** et s'ouvrant en direction opposée dudit bord transversal antérieur (**6**₁), au niveau des bords d'extrémités libres **(19),** le manchon présentant une longueur déterminée pour constituer après son retournement autour dudit bord transversal antérieur (**6**₁), une coiffe de protection et de propulsion enveloppant au moins une partie des faces recto et verso du sac à partir dudit bord transversal antérieur (**6**₁).

## Description

La présente invention concerne le domaine technique des emballages souples destinés au transport d'articles, tel que par exemple des produits pharmaceutiques, des prélèvements effectués dans les centres hospitaliers, des composants électroniques ou de l'argent, et elle vise plus particulièrement le domaine des emballages souples transportés à l'intérieur d'un réseau pneumatique, par aspiration ou soufflerie.

Par exemple, dans le domaine de la collecte de prélèvements sanguins ou autres, il est connu de mettre en oeuvre un réseau pneumatique comportant plusieurs postes de collecte pour des prélèvements placés dans des emballages qui sous l'effet de l'air comprimé du réseau sont acheminés vers un poste central de récupération.

L'état de la technique a proposé diverses solutions de réalisation d'emballages souples. Par exemple, le brevet FR 2 876 679 ou le brevet FR 2 859 987 décrit un emballage souple comprenant un sac réalisé en une matière plastique soudée dont l'ouverture donnant accès au volume interne est obturable après remplissage. Un tel emballage est équipé d'un système de propulsion à l'intérieur du réseau pneumatique constitué par un soufflet ou deux soufflets. Selon un autre exemple de réalisation décrit par le brevet FR 2 839 959, le système de propulsion est réalisé par deux poches de propulsion aménagées dans des prolongements du sac. Les deux poches de propulsion sont ouvertes l'une vers l'autre en direction du sac.

La demande de brevet EP 0 664 264 décrit également un emballage de transport comprenant un sac équipé d'une poche de propulsion réalisé par le retournement d'un film en matière plastique fixé en trois côtés sur le sac autour d'une extrémité.

Quel que soit la forme de réalisation, un tel emballage présente une largeur à plat de préférence supérieure au diamètre du tube du réseau pneumatique pour être véhiculé de manière optimum par aspiration ou soufflerie.

Il doit être considéré qu'un tel emballage souple, une fois obturé, présente une forme variable qui dépend d'une part, de la taille et/ou du volume du produit inséré à l'intérieur de l'emballage et, d'autre part de la position du produit à l'intérieur de l'emballage. Il s'avère en pratique quelquefois relativement difficile d'insérer un tel emballage à l'intérieur du réseau dans une position idéale pour lui permettre son transport à l'intérieur du réseau. L'introduction d'un tel emballage dans le réseau de transport est d'autant plus difficile que la largeur à plat de l'emballage est de préférence supérieure au diamètre du réseau de transport.

Bien entendu, la largeur de l'emballage est déterminée en fonction du diamètre du tube du réseau pneumatique pour permettre son déplacement par aspiration ou soufflage tout en limitant les phénomènes de frottement pour éviter la détérioration de l'emballage, voire éviter le coincement de l'emballage à l'intérieur du tube. En pratique, il a été constaté des problèmes de coincements des emballages à l'intérieur du tube notamment au niveau du poste central de récupération des emballages. Classiquement, un tel poste de récupération comporte une trappe coulissante obturant de manière étanche le tube. Le retrait de la trappe permet le passage des emballages arrivant à ce poste.

Quelquefois, certains emballages se retrouvent coincés au niveau de la section de passage de la trappe coulissante aménagée dans le tube du réseau pneumatique. Si un tel emballage peut être retiré plus ou moins facilement par l'opérateur, il n'en est pas de même pour les emballages suivants qui se retrouvent coincés en amont du tube. Une telle situation nécessite une intervention de maintenance relativement lourde à mener à bien qui de façon supplémentaire retarde la récupération des produits. De façon complémentaire, toute intervention ayant pour objectif de décoincer les emballages à l'intérieur du tube du réseau pneumatique constitue un risque d'endommagement des emballages pouvant aller jusqu'à leur percement, ce qui est susceptible d'entraîner une contamination lorsque l'emballage contient des produits biologiques.

L'objet de l'invention vise à remédier aux inconvénients de l'état de la technique en proposant un nouvel emballage souple conçu pour être facilement introduit et transporté de façon optimum à l'intérieur d'un réseau pneumatique de transport tout en évitant de se coincer en tout endroit du réseau pneumatique et en particulier au poste de récupération des emballages.

Pour atteindre un tel objectif, l'emballage selon l'invention comporte un sac réalisé en matière plastique souple possédant une face recto et une face verso délimitant un volume interne fermé accessible par un passage d'accès aménagé dans une face du sac et obturable à l'aide d'un moyen de fermeture étanche, le sac comportant deux bords longitudinaux fermés opposés et deux bords fermés transversaux opposés antérieur et postérieur.

Selon l'invention, l'emballage comporte à partir du bord transversal antérieur, un manchon en matière plastique souple comportant une première et une deuxième parois s'étendant à partir dudit bord transversal de manière superposée dans le prolongement des faces recto et verso jusqu'à des bords d'extrémité libres qui délimitent entre eux une ouverture de retournement, le manchon étant fermé au niveau du bord transversal antérieur et s'ouvrant en direction opposée dudit bord transversal antérieur, au niveau des bords d'extrémités libres, le manchon présentant une longueur déterminée pour constituer après son retournement autour dudit bord transversal antérieur, une coiffe de protection et de propulsion enveloppant au moins une partie des faces recto et verso du sac à partir dudit bord transversal antérieur.

De plus, l'emballage selon l'invention peut présenter en outre en combinaison au moins l'une et/ou l'autre des caractéristiques additionnelles suivantes :
- à partir du bord transversal postérieur, un manchon en matière plastique souple ouvert à l'opposé dudit bord transversal postérieur par une ouverture de retournement, le manchon présentant à partir dudit bord transversal postérieur, une longueur adaptée pour constituer après son retournement autour dudit bord transversal postérieur, une coiffe de protection et de propulsion enveloppant au moins une partie des faces recto et verso du sac à partir dudit bord transversal postérieur,
- un système de propulsion à l'intérieur du réseau pneumatique selon au moins un sens de transport de l'emballage qui est sensiblement perpendiculaire aux bords transversaux,
- les première et deuxième parois s'étendant dans le prolongement des faces recto et verso sont le prolongement des parois formant les faces recto et verso ou sont le prolongement d'au moins un film de protection rapporté et fixé sur les faces recto ou verso du sac, avec les parois s'étendant au-delà d'un bord transversal du sac,
- le manchon s'étend à partir du bord transversal de manière qu'après son retournement, la coiffe ainsi formée enveloppe au moins le moyen de fermeture étanche du sac,
- le manchon s'étend à partir du bord transversal, de manière qu'après son retournement, la coiffe ainsi formée ne recouvre pas un système d'ouverture facile aménagé sur le sac,
- un manchon s'étend à partir du bord transversal antérieur, de manière qu'après son retournement, la coiffe enveloppe la totalité du sac pour dépasser de l'autre bord transversal,
- les bords longitudinaux des parois sont fermés par soudure dans le prolongement des bords longitudinaux du sac,
- les bords longitudinaux des parois sont fermés par deux soudures de liaison s'étendant en direction des bords d'extrémités libres jusqu'à venir se raccorder sur le bord transversal en deux points de raccordement dont l'écartement entre eux est inférieur à la largeur des bords d'extrémité libres de manière que les parois constituent après leur retournement, une coiffe tronconique.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective montrant un premier exemple de réalisation d'un emballage conforme à l'invention dans un état avant fermeture.
La **Figure 2** est une vue en coupe longitudinale de l'emballage illustré à la **Fig. 1****.**
La **Figure 3** est une vue de l'emballage illustré aux **Fig. 1** et **2** dans un état fermé prêt à être inséré à l'intérieur d'un tube d'un réseau pneumatique.
La **Figure 4** est une vue en perspective d'un autre exemple de réalisation d'un emballage conforme à l'invention, dans un état avant fermeture.
La **Figure 5** est une vue en perspective de l'emballage illustré à la **Fig. 4** en position fermée pourvue d'une coiffe de protection conforme à l'invention.
La **Figure 6** est une vue en coupe montrant un autre exemple de réalisation d'un emballage comportant deux coiffes de protection et de propulsion.
La **Figure 7** est une vue en coupe d'un autre exemple de réalisation d'un emballage comportant une ailette de propulsion.

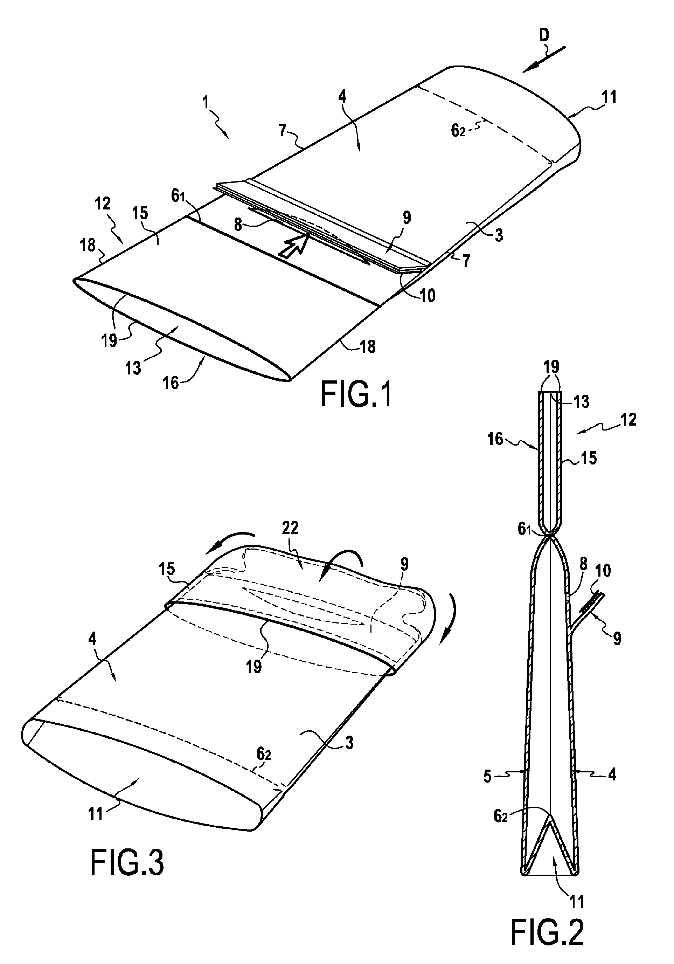

Tel que cela ressort plus précisément des **Fig. 1** à **3****,** l'objet de l'invention concerne un emballage **1** destiné à contenir des articles de toutes natures, tels que par exemple des prélèvements sanguins ou autres, des produits pharmaceutiques ou des billets de banque. Selon une application avantageuse, un tel emballage **1** est destiné à être introduit à l'intérieur d'un tube d'un réseau pneumatique non représenté, mais connu en soi pour permettre le transport d'un lieu à l'autre, d'un article contenu dans l'emballage.

D'une manière connue, l'emballage **1** se présente sous la forme d'un sac réalisé en matière plastique souple de préférence recyclable tel qu'en polyéthylène. Le sac **3** possède une face dite recto **4** et une face dite verso **5** délimité par deux bords transversaux opposés **6₁**, **6₂** sensiblement parallèles entre eux et deux bords longitudinaux opposés **7** sensiblement parallèles entre eux. Dans l'exemple illustré, l'emballage **1** présente une forme rectangulaire. Les bords **6₁**, **6₂**, sont dits transversaux en considération d'une part de la forme allongée de l'emballage illustré dans l'exemple de réalisation et d'autre part, de la direction de transport de l'emballage **1** à l'intérieur du réseau pneumatique, schématisée par la flèche **D.** En d'autres termes, la direction **D** de transport de l'emballage **1** est perpendiculaire aux bords transversaux **6₁**, **6₂**. De plus, en considération du sens de transport représenté par la flèche **D** à la **Fig. 1****,** les bords transversaux sont appelés respectivement antérieur **6₁**, et postérieur **6₂**. En d'autres termes, le sac **3** présente ainsi une tête délimitée par le bord transversal antérieur **6₁** et un fond délimité par le bord postérieur **6₂**.

Le sac **3** délimite un volume interne fermé à caractère étanche mais accessible par un passage d'accès **8** obturable par un moyen de fermeture **9.** Dans l'exemple illustré, la face du sac **3** dans laquelle est aménagé le passage d'accès **8** est la face recto **4.**

Le passage d'accès **8** est adapté pour permettre l'introduction de l'article à l'intérieur du volume interne du sac **3.** Il est à noter que, dans l'exemple illustré à la **Fig. 1****,** le passage d'accès **8** est réalisé à proximité du bord transversal antérieur **6₁** en s'étendant sensiblement parallèlement à ce bord transversal.

Bien entendu, le passage d'accès **8** peut être aménagé à un autre endroit de l'emballage par exemple dans la partie médiane du sac **3.** Le passage d'accès **8** est obturé par tout moyen de fermeture **9.**

Selon un exemple préféré de réalisation, le moyen de fermeture **9** est étanche de manière que l'emballage **1** puisse présenter un caractère étanche notamment pour le transport de prélèvements sanguins ou autres.

Selon cet exemple de réalisation, les bords du sac sont soudés également pour délimiter un volume interne étanche. Il est à noter que la solidité et par suite, l'étanchéité de l'emballage **1** peut être renforcée en rapportant sur tout ou partie des faces **4, 5,** au moins une feuille de plastique souple. Dans le même sens, l'emballage **1** peut être formé par une double paroi.

Selon une variante de réalisation, il est à noter que le passage d'accès **8** peut être obturé à l'aide d'une bande adhésive de sécurité **9** constituant de préférence un témoin d'inviolabilité. Comme illustré plus précisément aux **Fig. 1** et **2** cette bande adhésive **9** est fixée en partie sur l'emballage **1** et se trouve munie d'une protection détachable **10.** Après l'enlèvement de la protection **10,** la bande adhésive **9** est fixée sur l'emballage en venant recouvrir complètement le passage d'accès **8.**

De manière classique, les faces **4, 5** du sac **3** sont réalisées à partir d'une feuille plastique souple repliée ou de deux feuilles plastiques souples superposées dont au moins certains des bords sont soudés de manière à délimiter le volume interne fermé. Il est à noter que le bord transversal antérieur **6₁** est de préférence soudé sur toute sa longueur ainsi par exemple que les deux bords longitudinaux **7** qui sont fermés sur tout leur longueur par une soudure. Il est à noter que les bords transversaux antérieur **6₁** et postérieur **6₂** sont fermés de toute manière appropriée sur toute leur longueur comme par exemple, par soudure, collage ou pli.

Selon un mode de réalisation de l'invention, l'emballage **1** est pourvu d'au moins un système de propulsion **11** à l'intérieur du réseau pneumatique. Selon une variante de réalisation, et tel que cela ressort plus précisément des **Fig. 2** et **3****,** le système de propulsion **11** est réalisé par l'intermédiaire d'un soufflet de fond aménagé au niveau du bord transversal postérieur **6₂** opposé au bord transversal **6₁**. Il doit être considéré que le soufflet **11** est aménagé de sorte que l'emballage occupe, par son fond, une majeure partie de la section du réseau pneumatique de manière à pouvoir être déplacé d'une façon optimum selon un sens déterminé de la direction de transport représenté par la flèche **D.** De manière classique, l'emballage **1** présente par son bord transversal délimitant le soufflet **11** à savoir postérieur **6₂** dans l'exemple illustré, une largeur à plat de préférence supérieure au diamètre du réseau de transport de manière qu'après formation du soufflet de fond, le diamètre de l'emballage correspondant au diamètre du soufflet soit légèrement inférieur voir égal au diamètre du tube du réseau de transport.

Conformément à l'invention, l'emballage **1** comporte à partir du bord transversal antérieur **6₁**, une manche, un élément cylindrique ou tubulaire ou comme désigné dans la suite de la description, un manchon **12** en matière plastique souple fermé au niveau du bord transversal **6₁**, et ouvert à l'opposé du bord transversal antérieur **6₁**, par une ouverture de retournement **13.** Le manchon **12** est ainsi ouvert à l'une de ses extrémités par l'ouverture de retournement **13** et fermé à son extrémité opposée. Dans l'exemple de réalisation illustré, le manchon **12** comporte une première **15** et une deuxième **16** parois en matière plastique souple s'étendant dans le prolongement du sac **3** au moins partiellement de manière superposée. Les parois **15** et **16** s'étendent ainsi en dehors du sac **3** de sorte que les parois **15** et **16** et le sac **3** s'étendent de part et d'autre du bord transversal antérieur **6₁**. Les première **15** et deuxième parois **16** s'étendent dans le prolongement respectivement des faces recto **4** et verso **5.** Dans l'exemple illustré aux **Fig. 1** à **3****,** les parois **15** et **16** sont des prolongements des parois formant respectivement les faces recto **4** et verso **5** du sac **3.**

Dans l'exemple illustré, les deux parois **15** et **16** sont de surface identique en présentant une forme générale rectangulaire. Les parois **15, 16** présentent des bords longitudinaux **18** venant s'établir dans le prolongement des bords longitudinaux **7** du sac **3.** Les parois **15, 16** s'étendent à partir du bord transversal antérieur **6₁**, selon dans l'exemple illustré, une même longueur et jusqu'à des bords d'extrémité libres **19.**

Les bords longitudinaux **18** des deux parois **15** et **16** sont fermés ou assemblés entre eux à l'aide de tous moyens appropriés. Les bords longitudinaux **18** des parois **15** et **16** sont assemblés ensemble, par exemple, par soudure. De préférence, les bords longitudinaux **18** des parois **15, 16** et les bords longitudinaux **7** du sac **3** sont assemblés lors d'une même opération de soudure. Les bords longitudinaux **18** des parois **15** et **16** sont assemblés entre eux de préférence mais non exclusivement sur toute leur longueur à partir du bord transversal antérieur **6₁** jusqu'aux bords d'extrémités libres **19** des parois **15** et **16.** Les bords d'extrémité libres **19** des parois **15** et **16** sont libres ou ouverts l'un par rapport à l'autre et délimitent entre eux, l'ouverture **13** dite de retournement comme cela sera compris dans la suite de la description. Ainsi, les deux parois **15** et **16** forment le manchon **12** s'étendant dans le prolongement du sac **3** à partir du bord transversal antérieur **6₁** et jusqu'aux bords d'extrémité libres **19.** Un tel manchon **12** formé par les parois **15** et **16** s'ouvre ainsi à partir du bord transversal antérieur **6₁** en direction opposée du sac **3** et présente une forme aplatie au repos, jusqu'à une forme pseudo-tubulaire lorsque les parois **15,16** sont mises en forme.

Il est à noter que dans l'exemple illustré aux **Fig**. **1** à **3****,** les deux parois **15, 16** possèdent une longueur identique de sorte que l'ouverture **13** est réalisée au niveau des bords d'extrémité libres **19** des parois **15**, **16.** Dans le cas où une paroi est plus longue que l'autre, l'ouverture **13** est réalisée entre le bord d'extrémité libre de la paroi la plus courte et la partie correspondante de la paroi la plus longue. Le manchon **12** est donc formé par les parties des parois **15**, **16** placées uniquement en vis-à-vis l'une de l'autre et s'ouvrant de part et d'autre du bord transversal antérieur **6₁**.

Conformément à l'invention, le manchon **12** présente à partir du bord transversal antérieur **6₁**, une longueur déterminée pour constituer après son retournement, une coiffe de protection et de propulsion **22** tel que cela ressort clairement de la **Fig. 3****.** Cette coiffe **22** enveloppe ainsi au moins partiellement les faces recto **4** et verso **5** du sac **3** à partir de son bord transversal antérieur **6₁**. Cette coiffe **22** présente une forme pseudo-hémisphérique à partir du bord transversal antérieur à partir duquel elle s'étend, complétée éventuellement en fonction de sa longueur, par une forme tubulaire ou pseudo-tubulaire venant envelopper le corps du sac **3.** Cette coiffe **22** est donc constituée uniquement par la première paroi **15** et la deuxième paroi **16** assemblées entre elles de manière à former ensemble une pièce de recouvrement des faces recto **4** et verso **5,** avec une paroi unique, c'est-à-dire à simple épaisseur. Avantageusement, le manchon **12** possède à partir du bord transversal antérieur **6₁**, une longueur au moins égale à 3 cm et de préférence égale à 7 cm.

Il est à noter que le retournement du manchon **12** c'est-à-dire des parois **15,16** est relativement facile à mener à bien puisqu'il suffit d'écarter les deux parois **15,16** par l'ouverture **13** et de retourner ou retrousser ces deux parois en direction des faces recto **4** et verso **5** en exerçant un effort léger vers l'intérieur du sac sur les coins du sac situés à l'intersection entre le bord transversal antérieur **6₁** et les bords longitudinaux **7.** Les coins du sac situés au niveau du bord transversal antérieur **6₁** se retrouvent ainsi rentrés ou pliés et protégés en étant enveloppés par les parois **15,16.** Il doit être compris que les faces internes avant retournement des parois **15, 16** se retrouvent après retournement, à l'extérieur de l'emballage **1.**

Le sac **3** se trouve ainsi enveloppé à partir de son bord transversal antérieur **6₁**, sur toute sa périphérie ou section et sur au moins une partie de sa hauteur. L'emballage **1** présente ainsi au niveau de son bord transversal **6₁** une forme pseudo hémisphérique facilitant son insertion et son déplacement à l'intérieur du réseau pneumatique puisque la largeur de l'emballage au niveau du bord transversal **6₁** ou de sa tête est inférieure par rapport au reste de l'emballage. Compte tenu de la présence de la coiffe **22**, l'emballage **1** ne présente plus de coins anguleux toujours sujets au coincement de l'emballage à l'intérieur du réseau pneumatique. De manière complémentaire, cette coiffe **22** protège le sac contre l'usure due au frottement de l'emballage à l'intérieur du réseau pneumatique. De plus, cette coiffe **22** est à même de participer à la propulsion de l'emballage à l'intérieur d'un tube du réseau pneumatique de transport dans la mesure où la coiffe **22** peut être décollée par rapport au sac **3.** Dans ce cas, l'emballage **1** peut ne pas comporter un système de propulsion **11** de sorte que la propulsion est assurée uniquement par la coiffe **22.**

Selon une variante avantageuse de réalisation, les parois **15** et **16** s'étendent à partir du bord transversal antérieur **6₁** de manière qu'après leur retournement, la coiffe **22** enveloppe au moins le moyen de fermeture étanche **9** du sac **3.** En d'autres termes, la longueur du manchon **12** est suffisante pour permettre, après son retournement, de venir recouvrir ou envelopper le moyen de fermeture **9.** Une telle variante permet d'éviter que le moyen de fermeture **9** constitue un point d'accrochage contribuant au coincement de l'emballage à l'intérieur du réseau pneumatique et de préserver l'étanchéité du sac **3** contre une altération dans le tube au niveau du moyen de fermeture **9.** De plus, la coiffe **22** vient recouvrir l'éventuel surplus d'adhésif ou de colle du moyen de fermeture **9,** évitant son adhésion sur le tube du réseau pneumatique.

Selon une autre variante de réalisation, le manchon **12** s'étend à partir du bord transversal **6₁** de manière qu'après son retournement, la coiffe **22** enveloppe sensiblement la totalité du sac **3** voire dépasse légèrement le bord transversal opposé du sac. Cette variante de réalisation permet de renforcer la résistance aux frottements de l'emballage sans avoir à doubler la paroi du sac ou à rapporter des films de protection.

Il ressort de la description qui précède que l'emballage **1** possède un premier état avant fermeture et un deuxième état après formation de la coiffe **22.** Dans son premier état, les parois **15, 16** s'étendent dans le prolongement du sac **3.** Dans cet état, le sac **3** peut être rempli par l'article et être obturé par son moyen de fermeture étanche **9.** Les parois **15, 16** constituant le manchon **12** sont retroussées pour venir recouvrir le sac **3** de sorte que l'emballage **1** à l'aide de la coiffe **22**, occupe un deuxième état pour lequel l'emballage **1** est prêt à être introduit dans le réseau pneumatique.

Dans l'exemple illustré aux **Fig. 1** et **3****,** les deux parois **15,16** forment un manchon **12** de section sensiblement constante sur toute la longueur c'est-à-dire entre le bord transversal antérieur **6₁** et les bords d'extrémités libres **19.** Bien entendu, la section du manchon **12** est variable puisqu'il est réalisé en matière plastique souple. Ainsi, au repos, le manchon **12** présente une forme aplatie. Lors de sa mise en forme pour notamment venir recouvrir la tête du sac **3**, le manchon **12** peut présenter une section pseudo-circulaire en particulier au niveau de son ouverture **13.**

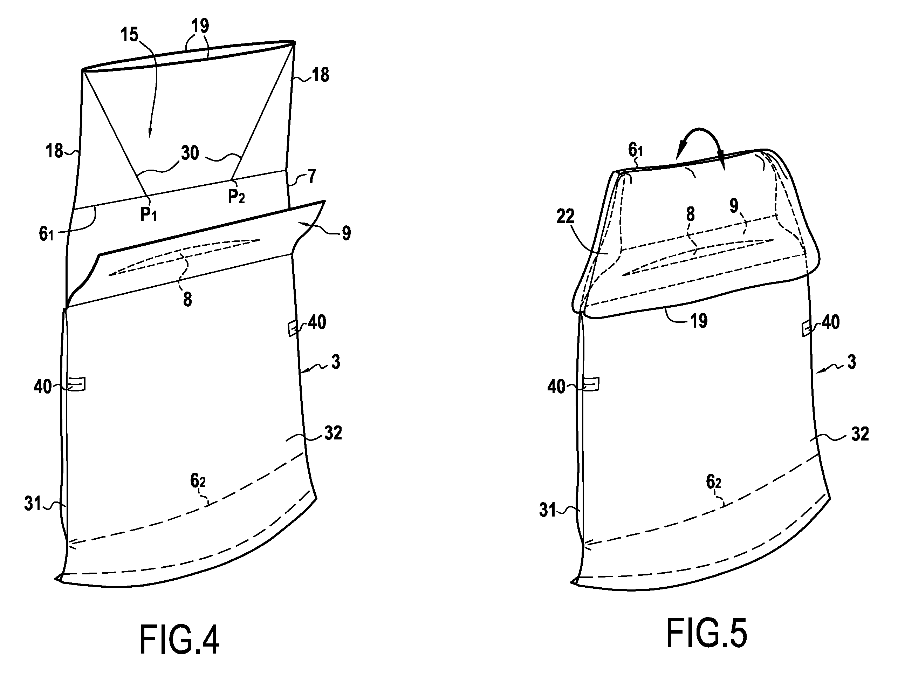

Les **Fig**. **4** et **5** illustrent un autre exemple de réalisation dans lequel les bords longitudinaux **18** des parois **15, 16** sont fermés par deux soudures de liaison **30** s'étendant en direction des bords d'extrémités libres **19** jusqu'à venir se raccorder sur le bord transversal antérieur **6₁** en deux points de raccordement **P₁**, **P₂** dont l'écartement entre eux est inférieur à la largeur des bords d'extrémité libres **19** des parois. Les deux soudures de liaison **30** viennent ainsi s'établir, dans l'exemple illustré aux **Fig. 4** et **5****,** jusqu'aux bords d'extrémité libres **19**, sensiblement au niveau des bords longitudinaux **18** des parois **15**, **16**. Les parois **15, 16** constituent après leur retournement, une coiffe **22** tronconique. Il est à noter que les soudures de liaison **30** peuvent s'étendre en retrait des bords d'extrémité libres **19.** Cette variante de réalisation renforce l'effet de forme d'ogive donnée à l'emballage **1,** ce qui permet de faciliter l'introduction de l'emballage à l'intérieur du tube du réseau pneumatique. Il est à noter que l'écartement entre les points de raccordement **P₁**, **P₂** est choisi pour conférer à l'emballage une forme d'ogive tout en permettant un retournement facile du manchon **12.** Selon cette variante de réalisation, les parois **15, 16** sont fermées par les soudures de liaison **30** de sorte qu'il est possible de supprimer la soudure réalisée entre les parois **15**, **16** et dans le prolongement des bords longitudinaux **7.** Cette variante de réalisation laisse également la possibilité de supprimer les parties des parois **15, 16** situées à l'extérieur du bord antérieur **6₁** et des soudures **30** en direction des bords **18.**

Dans l'exemple de réalisation illustré aux **Fig. 1** à **3****,** les première et deuxième parois **15** et **16** sont des prolongements des parois ou des films formant les faces recto et verso du sac **3.** Dans l'exemple de réalisation illustré aux **Fig. 4** et **5****,** les première et deuxième parois **15** et **16** sont des prolongements de films de protection **31,32** rapportés et fixés sur les faces recto **4** et verso **5** du sac **3.** De tels films de protection **31, 32** sont fixés sur les faces recto **4** et verso **5** du sac **3** tel que décrit aux **Fig. 4** et **5** en se prolongeant au-delà du bord transversal antérieur **6₁** pour former les parois **15**, **16**. Bien entendu, au moins un des films de protection **31, 32** comporte une ouverture destinée à être mise en coïncidence avec le passage d'accès **8** au sac **3.** Ce film de protection est pourvu d'un moyen de fermeture étanche **9** pour permettre d'obturer le sac **3.**

Bien entendu, il peut être envisagé que seulement une des parois **15, 16** soit le prolongement d'un film de protection rapporté, l'autre des parois **15, 16** étant réalisée par le prolongement de la paroi formant une face du sac et par exemple celle verso pourvue du passage d'accès **8.** Dans ce cas, un autre film de protection peut être rapporté sur cette face en retrait par rapport au moyen de fermeture **9.**

Un autre mode de réalisation du manchon **12** est de rapporter par exemple par soudage, deux parois **15, 16** au niveau de la tête du sac **3** au-delà du bord transversal antérieur **6₁**. Dans ce cas, le bord transversal antérieur **6₁** soudé autour duquel le manchon **12** est retourné peut être différent du bord transversal antérieur soudé délimitant le sac **3** proprement dit ou être le même en cas de réalisation d'une soudure commune.

Selon une variante avantageuse de réalisation, le sac **3** comporte un système **40** d'ouverture facile tel que des prédécoupes ou une découpe aménagée dans un aplat de soudure qui, après ouverture, permettent d'accéder à l'article contenu à l'intérieur de sac **3.** Selon cette variante avantageuse, la longueur du manchon **12** ou des parois **15, 16** est telle qu'après le retournement des parois **15, 16,** ces parois **15, 16** ne recouvrent pas le système d'ouverture facile **40** afin que ce dernier soit directement accessible. Il est à noter que selon cette caractéristique, l'une des parois peut présenter une longueur supérieure à l'autre paroi permettant de protéger l'une des parois du sac **3** tout en donnant accès au système d'ouverture facile **40.**

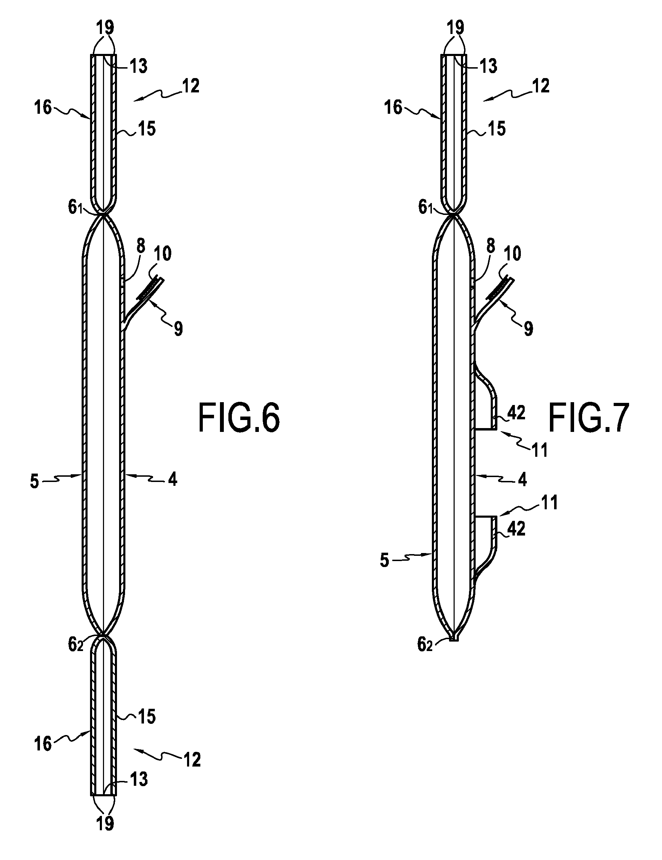

Dans les exemples illustrés aux **Fig. 1** à **5****,** l'emballage **1** comporte un unique manchon **12.** La **Fig. 6** illustre une autre variante de réalisation dans laquelle l'emballage **1** est pourvu de deux manchons **12** disposés symétriquement aux extrémités du sac **3.** Ainsi, l'emballage **1** comporte à partir du bord transversal postérieur **6₂**, un deuxième manchon **12** en matière plastique, ouvert à l'opposé du bord transversal **6₂** par une ouverture de retournement **13.** Ce deuxième manchon **12** comporte comme expliqué ci-dessus, deux parois **15, 16** s'étendant en dehors du sac, de manière superposée et de part et d'autre du bord transversal postérieur **6₂.** Ce deuxième manchon **12** qui s'étend à partir du bord transversal postérieur **6₂** présente les caractéristiques décrites ci-dessus pour le premier manchon **12** s'étendant à partir du bord transversal antérieur **6₁.** Comme expliqué ci-dessus, le deuxième manchon **12** s'étendant à partir du bord transversal postérieur **6₂** possède une longueur déterminée pour constituer après son retournement autour du bord transversal postérieur **6₂,** une coiffe **22** de protection et de propulsion enveloppant au moins une partie des faces recto et verso du sac à partir du bord transversal postérieur **6₂.** Selon ce mode de réalisation, l'emballage **1** présente deux coiffes **22** s'étendant tête bêche de sorte que l'emballage **1** possède une forme générale tubulaire lorsque les deux manchons sont retournés. Outre la protection qu'il en découle, les coiffes **22** assurent également la propulsion de l'emballage selon ses deux sens dans le tube du réseau pneumatique.

Il est à noter que les longueurs des deux manchons **12** sont choisies de manière que les coiffes **22** soient distantes l'une de l'autre ou ne se touchent pas par leurs extrémités **19** afin de pouvoir assurer la propulsion de l'emballage.

La **Fig. 7** illustre une autre variante de réalisation d'un emballage **1** comportant un seul manchon **12** mais équipé d'un système de propulsion **11** différent d'un soufflet de fond. Selon cette variante de réalisation, le système de propulsion **11** comporte au moins une, et dans l'exemple illustré, deux ailettes **42** réalisées par exemple, à l'aide de deux films rapportés sur le sac **3** et s'ouvrant sous l'action de l'air.

## Revendications

1. Emballage pour le transport d'articles à l'intérieur d'un tube d'un réseau pneumatique, comportant un sac **(3)** réalisé en matière plastique souple possédant une face recto **(4)** et une face verso **(5)** délimitant un volume interne fermé accessible par un passage d'accès **(8)** aménagé dans une face du sac et obturable à l'aide d'un moyen de fermeture étanche **(9),** le sac **(3)** comportant deux bords longitudinaux fermés **(7)** opposés et deux bords fermés transversaux opposés antérieur (**6₁**) et postérieur (**6₂**), **caractérisé en ce qu'il** comporte à partir du bord transversal antérieur (**6₁**), un manchon **(12)** en matière plastique souple comportant une première **(15)** et une deuxième **(16)** parois s'étendant à partir dudit bord transversal (**6₁**) de manière superposée dans le prolongement des faces recto **(4)** et verso **(5)** jusqu'à des bords d'extrémité libres **(19)** qui délimitent entre eux une ouverture de retournement (**13**), le manchon **(12)** étant fermé au niveau du bord transversal antérieur (**6₁**) et s'ouvrant en direction opposée dudit bord transversal antérieur (**6₁**), au niveau des bords d'extrémités libres **(19),** le manchon présentant une longueur déterminée pour constituer après son retournement autour dudit bord transversal antérieur (**6₁**), une coiffe **(22)** de protection et de propulsion enveloppant au moins une partie des faces recto et verso du sac à partir dudit bord transversal antérieur (**6₁**).

2. Emballage selon la revendication 1, **caractérisé en ce qu'il** comporte à partir du bord transversal postérieur (**6₂**), un manchon **(12)** en matière plastique souple ouvert à l'opposé dudit bord transversal postérieur (**6₂**) par une ouverture de retournement (**13**), le manchon **(12)** présentant à partir dudit bord transversal postérieur(**6₂**), une longueur déterminée pour constituer après son retournement autour dudit bord transversal postérieur (**6₂**), une coiffe **(22)** de protection et de propulsion enveloppant au moins une partie des faces recto et verso du sac à partir dudit bord transversal postérieur (**6₂**).

3. Emballage selon la revendication 1, **caractérisé en ce qu'il** comporte un système de propulsion **(11)** à l'intérieur du réseau pneumatique selon au moins un sens de transport **(D)** de l'emballage qui est sensiblement perpendiculaire aux bords transversaux.

4. Emballage selon la revendication 3, **caractérisé en ce que** les première **(15)** et deuxième **(16)** parois s'étendant dans le prolongement des faces recto **(4)** et verso **(5)** sont le prolongement des parois formant les faces recto **(4)** et verso **(5)** ou sont le prolongement d'au moins un film de protection rapporté et fixé sur les faces recto ou verso du sac, avec les parois **(15, 16)** s'étendant au-delà d'un bord transversal du sac.

5. Emballage selon l'une des revendications 1 à 4, **caractérisé en ce que** le manchon **(12)** s'étend à partir du bord transversal de manière qu'après son retournement, la coiffe **(22)** ainsi formée enveloppe au moins le moyen de fermeture étanche **(9)** du sac.

6. Emballage selon l'une des revendications 1 à 5, **caractérisé en ce que** le manchon **(12)** s'étend à partir du bord transversal, de manière qu'après son retournement, la coiffe **(22)** ainsi formée ne recouvre pas un système d'ouverture facile **(40)** aménagé sur le sac.

7. Emballage selon la revendication 1, **caractérisé en ce qu'**un manchon s'étend à partir du bord transversal antérieur (**6₁**), de manière qu'après son retournement, la coiffe **(22)** enveloppe la totalité du sac **(3)** pour dépasser du bord transversal du sac.

8. Emballage selon l'une des revendications 1 à 7, **caractérisé en ce que** les bords longitudinaux **(18)** des parois **(15, 16)** sont fermés par soudure dans le prolongement des bords longitudinaux **(7)** du sac.

9. Emballage selon l'une des revendications 1 à 8, **caractérisé en ce que** les bords longitudinaux **(18)** des parois **(15, 16)** sont fermés par deux soudures de liaison **(30)** s'étendant en direction des bords d'extrémités libres **(19)** jusqu'à venir se raccorder sur le bord transversal (**6₁**, **6₂)** en deux points de raccordement (**P₁**, **P₂**) dont l'écartement entre eux est inférieur à la largeur des bords d'extrémité libres de manière que les parois **(15, 16)** constituent après leur retournement, une coiffe tronconique **(22).**
